# EUROPEAN PATENT SPECIFICATION

(11) **EP 3 405 038 B1**
(45) Date of publication and mention of the grant of the patent: **18.09.2024**
(21) Application number: 16722953.3
(22) Date of filing: 22.01.2016
(51) Int. Cl.: A23B 7/04, A23B 7/06, A23L 19/00, B26D 3/26, G01N 33/02

(54) **METHOD FOR PREPARING CUT AND FROZEN VEGETABLES**
VERFAHREN ZUR ZUBEREITUNG VON GESCHNITTENEM UND GEFRORENEM GEMÜSE
PROCÉDÉ DE PRÉPARATION DE LÉGUMES COUPÉS ET CONGELÉS

(43) Date of publication of application: 28.11.2018
(73) Proprietor: Industrie Rolli Alimentari S.p.A., 64026 Roseto degli Abruzzi (Teramo) (IT)
(72) Inventor: ROLLI, Gian Paolo, 43035 Felino, Frazione S. Michele di Tiorre (IT) (IT)
(74) Representative: Modiano, Micaela Nadia
(86) International application number: PCT/IT2016/000015
(87) International publication number: WO 2017/125958

(56) References cited:
- WO-A1-00/19830
- WO-A1-96/19113
- US-A- 3 567 468
- US-A1- 2004 156 960
- ANONYMOUS: "How to Freeze Zucchini Noodles aka Zoodles - my1stwordwaschocolate", 16 April 2013 (2013-04-16), pages 1 - 5, XP055751209, Retrieved from the Internet <URL:http://www.my1stwordwaschocolate.com/blog/2013/04/zucchini-noodles> [retrieved on 20201117]
- DATABASE FSTA [online] INTERNATIONAL FOOD INFORMATION SERVICE (IFIS), FRANkFURT-MAIN, DE; ANONYMOUS: "Vegetable packer adopts metal detectors for its high-speed packaging lines.", XP002758601, Database accession no. FS-1982-01-F-0001
- QUICK FROZEN FOODS, vol. 41, no. 12, 1979, QUICK FROZEN FOODS, pages 32
- DATABASE FSTA [online] INTERNATIONAL FOOD INFORMATION SERVICE (IFIS), FRANkFURT-MAIN, DE; DEARDEN R: "Automatic X-ray inspection for the food industry.", XP002758602, Database accession no. FS-1997-02-E-0011
- DEARDEN R, FOOD SCIENCE & TECHNOLOGY TODAY, vol. 10, no. 2, 1996, pages 87
- DATABASE FSTA [online] INTERNATIONAL FOOD INFORMATION SERVICE (IFIS), FRANkFURT-MAIN, DE; HUNT J: "Frozen gold.", XP002758603, Database accession no. FS-1999-05-Jh1223
- HUNT, J., FOOD REVIEW, vol. 25, no. 5, 1998, pages 19 - 25
- DATABASE GNPD [online] MINTEL; October 2012 (2012-10-01), ANONYMOUS: "Julienned Carrots, Celery and gourgettes", XP002758604, retrieved from www.gnpd.com Database accession no. 1915343
- DATABASE GNPD [online] MINTEL; March 2015 (2015-03-01), ANONYMOUS: "Beef with onions & chinese noodles", XP002758605, retrieved from www.gnpd.com Database accession no. 3072359
- DATABASE FSTA [online] INTERNATIONAL FOOD INFORMATION SERVICE (IFIS), FRANkFURT-MAIN, DE; BOGNAR A: "Studies on partial or full elimination of pesticide residues from foods of vegetable origin by preparation and cooking. (translated) TIOL- Untersuchung zur Verminderung oder Beseitigung von Pflanzenschutzmittelrueckstaenden in pflanzlichen Lebensmitteln durch kuechentechnische Verfahren.", XP002758608, Database accession no. FS-1977-10-J-1411
- DEUTSCHE LEBENSMITTEL-RUNDSCHAU, vol. 73, no. 5, 1977, pages 149

## Description

The present invention relates to a method for preparing cut and frozen vegetables and a corresponding food product made according to such method.

The innovation is located in the progression of the current sociocultural context that sees increasing attention being given over to diet as a key element in preserving the psychological and physical well-being of the person.

Various information campaigns, including by official bodies, highlight that a healthy and balanced diet is a determining factor in keeping the human body healthy.

In this regard, for example, the World Health Organization has said that a balanced and healthy diet can prevent the onset of at least 1/3 of tumors and cardiovascular diseases.

There are at least four key aspects that distinguish a balanced diet.

The first is choosing foods correctly. Furthermore, it is necessary to tailor the amounts eaten to the actual nutritional needs of the individual, which depend on age, sex, the level of physical activity and the like.

Another key aspect is checking the nutritional values associated with the foods that one eats and furthermore it is likewise important to pay attention to the changes that the foods can undergo with conservation and cooking.

One of the reference models followed for creating a healthy diet is the food pyramid, which distinguishes the foods that can be eaten several times a day (fruit and vegetables) from the foods whose consumption should be limited or occasional (condiments, sweets, and alcoholic beverages).

Fruit and vegetables in fact are very important for a healthy diet in that they are an important source of fibers, an essential element in the digestive process; furthermore they are rich, both in vitamins and minerals that are essential for the proper operation of the physiological mechanisms, and in antioxidants that have a protective action on the body.

In order to stimulate the consumption of fruit and vegetables, therefore, new recipes are continually developed that make it possible to boost the opportunities for consumption thereof.

In this regard specialist cookery magazines, books and websites offer recipes that involve, as an alternative to using spaghetti, tagliatelle or pasta made from semolina flour or various other flours, the use of spaghetti, tagliatelle, pappardelle or in general long pasta of plant origin, obtained by processing fresh vegetables.

The use and consumption of this type of plant product is not yet widespread however, in particular because there are no convincing and practical commercial solutions on the market which enable interested consumers to include them in their daily diet without it being necessary to prepare them themselves starting from the fresh vegetables.

The aim of the present invention is to solve the above mentioned problems, and moreover offer a commercial response to the needs resulting from them, by providing a method, and corresponding food product made according to such method, for preparing cut and frozen vegetables which safeguards the organoleptic and nutritional properties of the vegetables of which the product is constituted.

Within this aim, an object of the invention is to provide a food product constituted by frozen and packaged vegetables which is easy and quick to prepare and which has a useful commercial life, i.e. shelf life, equal to at least 18 months.

Another object of the present invention is to provide a method for preparing cut and frozen vegetables which is low cost, easily and practically implemented and safe in use.

This aim and these and other objects which will become better apparent hereinafter are achieved by a method for preparing cut and frozen vegetables, which consists in:
- Washing the vegetables in order to eliminate any residues of earth or of other substances and materials which may have accumulated during the harvest;
- Subjecting said vegetables to mechanical treatment in order to isolate the edible part thereof;
- Cutting said vegetables into strips of thickness comprised between 2 mm and 5 mm and width comprised between 2 mm and 20 mm, through the use of a cutting device;
- Steam-cooking said strips;
- Air-drying said strips;
- Dividing said strips into portions corresponding to a preset quantity;
- Freezing said portions by way of a freezer to a temperature comprised between -18 °C and -30 °C.

Such aim and such objects are also achieved by a food product constituted by frozen and packaged vegetables, characterized in that it comprises a container and vegetables previously subjected to washing, mechanical treatment and cutting in order to define strips of thickness comprised between 2 mm and 5 mm and width comprised between 2 mm and 20 mm.

Further characteristics and advantages of the invention will become better apparent from the detailed description that follows of a preferred, but not exclusive, embodiment of the method for preparing cut and frozen vegetables and the corresponding food product produced according to such method.

It should be noted that the vegetables can be of the type preferably chosen from a tuber such as potatoes, turnip, parsnip, daikon and beetroots, carrot, squash, pumpkin, aubergine, cucumber.

It should further be noted that such food product comprises a container and vegetables previously subjected to washing, mechanical treatment and cutting in order to define strips of thickness comprised between 2 mm and 5 mm and width comprised between 2 mm and 20 mm.

Such strips have a long pasta format such as spaghetti, tagliatelle and pappardelle.

Generically this pasta format will preferably be identified with the word "noodle".

The method, according to the invention, consists, firstly, in washing the vegetables in order to eliminate any residues of earth or of other substances and materials which may have accumulated during the harvest.

In a subsequent step it is necessary to subject the vegetables to mechanical treatment in order to isolate the edible part thereof.

By mechanical treatment what is meant is all processes that are useful to isolate the edible part of the vegetable, while removing everything that is not necessary and/or superfluous for dietary purposes.

Subsequently the process involves cutting these vegetables into strips of thickness comprised between 2 mm and 5 mm and width comprised between 2 mm and 20 mm, through the use of a cutting device.

Such strips have a long pasta format such as spaghetti, tagliatelle and pappardelle.

Generically this pasta format will preferably be identified with the word "noodle".

In particular, such device can be an automatic machine provided with a cutter that operates by executing a circular cutting action on the vegetable to create the desired strips.

At this point the method involves steam-cooking the strips and air-drying them.

Once the strips have dried, they are divided into portions corresponding to a preset quantity.

Finally, such weighed portions are frozen by way of a freezer to a temperature comprised between -18 °C and -30 °C.

The possibility is not ruled out however that the step of dividing the strips into portions corresponding to a preset quantity can be carried out before the step of cooking and drying the strips.

According to an embodiment of undoubted practical and applicative interest, the method, according to the invention, can involve further processing steps before the freezing step.

More specifically, in a first possible further processing step, the packaging of the portions of strips in containers can be carried out through the use of a packaging machine.

Such container can be constituted by a box-like body, a packet, a combination thereof.

Then a device of the type of a metal detector, X-ray detector and the like is used to check for the presence of foreign objects inside the containers.

At this point, the containers are frozen by way of a freezer to a temperature comprised between -18 °C and -30 °C.

The possibility is not ruled out however that these further steps of processing, again before the step of freezing, can consist, first of all, of vacuum packaging such portions of strips through the use of a machine for insertion into packets, followed by a step of checking, through the use of a device of the type of a metal detector, X-ray detectors, for the presence of foreign objects inside the packets.

Subsequently, the method can proceed with the freezing of the packets by way of a freezer to a temperature comprised between -18 °C and - 30 °C.

Once the step of freezing is complete, the method then inserts the containers or the packets, depending on the type of final packaging envisaged, into a secondary packaging which will subsequently be arranged on a pallet.

By secondary packaging, what is meant is a packaging designed to constitute, at the point of sale, the grouping of a certain number of sales units, irrespective of whether it is sold as such to the end user or to the consumer, or it serves only to facilitate resupplying the shelves at the point of sale.

It can be removed from the product without altering its characteristics (Article 35, letter c) of Italian Legislative Decree no. 22/97).

The secondary packaging can constitute both the unit of sale aimed at the end consumer and also the unit aimed at the retailer.

Finally, such pallets can be stored in cold rooms while awaiting final use. It should be noted that the temperature inside such cold rooms can be at least -20°C.

According to an embodiment of undoubted efficiency and effectiveness, the step of packaging can include a substep that consists of adding at least one precooked and frozen condiment in pellets to the portions of strips in order to flavor such strips.

Such condiment can be a sauce, a garnish and the like.

The possibility is not ruled out however of adding the condiment fresh and non-frozen, in a form preferably chosen from liquid, partially solid and the like, after the step of cooking.

In particular the pellets, according to the invention, comprise a condiment that has previously been subjected to cooking, cooling, division into portions of preset weight, and freezing.

The present invention also sets out to protect a food product, constituted by frozen and packaged vegetables, which comprises a container and vegetables previously subjected to washing, mechanical treatment and cutting in order to define strips of thickness comprised between 2 mm and 5 mm and width comprised between 2 mm and 20 mm.

Such strips have a long pasta format such as spaghetti, tagliatelle and pappardelle.

Generically this pasta format will preferably be identified with the word "noodle".

Such container can be at least partially constituted by at least one material selected from ethylene vinyl alcohol (EVOH), polyamide (PA), polypropylene (PPL), polyethylene (PE), lignin, polymers derived from maize, cellulose (of plant origin), paper, or cardboard.

It will therefore be possible for the consumer to perform the cooking of such vegetable in a skillet or by way of a traditional or microwave oven.

If cooking by way of a microwave oven is used, it should be noted that such container, being microwave-safe, can also be used as a cooking vessel and optionally as a plate from which to consume the vegetable contained therein after microwaving, thus simplifying and optimizing the entire process of using the food product.

The food product, according to the invention, can further comprise at least one pellet containing a precooked and frozen condiment in order to flavor the strips.

The possibility is not ruled out however that the food product can comprise a fresh and non-frozen condiment, in a form preferably chosen from liquid, partially solid and the like.

Such condiment can be a sauce, a garnish and the like.

The process of fractionation into pellets is necessary in order to be able to then correctly measure the quantity of frozen condiment required according to the recipe by each finished food product that it is desired to obtain.

The use of salt or other condiments can be left to the discretion of the consumer and can be added when cooking is complete.

It should be noted that the vegetables can be of the type preferably chosen from a tuber (potato, turnip, parsnip, daikon, beetroot and the like), carrot, squash, pumpkin, aubergine, cucumber and the like.

Furthermore, the condiment can comprise at least one element chosen from plants, meat, fish, cheese, oil and the like.

It should further be noted that the vegetables used can contain a residue of pesticides lower than a preset threshold.

Such preset threshold can be 0.01 mg/Kg.

The agricultural process of obtaining vegetables to be subsequently converted to frozen and packaged strips is implemented by following the provisions of regulations for integrated production, i.e. a set of legally binding specific plant protection techniques and indications to be adopted for each crop and regulated, in Italy, by specific regional regulations.

Such regulations are further applied more restrictively with the objective of ensuring a level of pesticide residues lower than 0.01 mg/Kg.

Such condition therefore makes it possible to classify the vegetables as "free from pesticide residues" or "pesticide-free".

It should be noted that, in order to render each batch of packaged frozen food product of agricultural origin traceable, all the data corresponding to each step are cataloged in a specific database and associated with a corresponding identification string (batch code shown on the containers with which the food product will be sold).

The possibility is not ruled out however that the vegetables used are of the type originating from organic agriculture.

According to a solution of particular utility and practicality, the container can be at least partially constituted by at least one material selected from ethylene vinyl alcohol (EVOH), polyamide (PA), polyethylene (PE), lignin, polymers derived from maize, cellulose (of plant origin), paper, or cardboard, in order to render the container microwave-safe.

According to a different solution of particular effectiveness and efficiency, the container can be at least partially constituted by ethylene vinyl alcohol (EVOH), polyamide (PA), or polyethylene (PE) in order to render the container recyclable.

Such embodiment will make it possible to obtain a container that can be recyclable in a percentage comprised between 96% and 98%.

According to a further solution of particular effectiveness and efficiency, the container can be at least partially constituted by lignin, cartene^{®}, polymers derived from maize, or cellulose of plant origin, in order to render the container compostable.

According to a preferred solution the container can be constituted by a box-like body, a packet, a combination thereof and the like.

The possibility is not ruled out that the container can be constituted by a box-like body made of cardboard provided with a layer of inner lining made of material of the type of ethylene vinyl alcohol (EVOH), polyamide (PA) and polyethylene (PE).

Such layer of inner lining is impermeable, thus preventing the water contained naturally in the vegetables from moistening the container and making it, effectively, unusable.

More specifically, the basis weight of the cardboard can be preferably 300 g, while that of the layer of lining can be preferably 20 g.

The possibility is not ruled out however that the basis weight of the box-like body and of the lining can differ from the above values.

The possibility is not ruled out furthermore that the container can be a tray provided with a film of polymeric material to close it.

Once the food is consumed it will then be possible to separate the container from the closing film for their separate recycling.

Different formats are also envisaged according to the number of portions envisaged in the food product.

The food information can be printed directly on the container or on a strip that wraps around the package, if the container takes the form of a box-like body, for example a tray.

In order to make clear which foods are packaged frozen foods, according to the invention, below are some examples of the types of food product that can be produced.

It should be noted that such examples are given solely for the purposes of illustration and cannot therefore be considered applicable to a limitation of the scope of protection of the present invention.

### EXAMPLE 1: CARROT SPAGHETTI.

The food product comprises strips of carrot with no condiment, packaged in the container, according to the invention. The addition of condiments or sauces, if any, is left to the discretion of the consumer.

### EXAMPLE 2: PUMPKIN SPAGHETTI WITH GARLIC AND CHEESE.

The food product comprises strips of pumpkin with condiment containing garlic and cheese, all packaged in the container, according to the invention.

Such condiment can be in the form of frozen pellets, or added in liquid form to the strips prior to the step of freezing.

### EXAMPLE 3: CARROT AND SQUASH SPAGHETTI WITH BOLOGNESE SAUCE.

The food product comprises strips of squash and strips of carrot with Bolognese sauce and slices of mozzarella cheese, all packaged in the container, according to the invention.

Such condiment can be in the form of frozen pellets, or added in liquid form to the strips prior to the step of freezing.

It should further be noted that the vegetables used can be obtained by adopting an agronomic method that consists of a series of consecutive steps, some of which are reiterated according to specific cycles, which makes it possible to obtain vegetables that can contain a residue of pesticides lower than a preset threshold of 0.01 mg/Kg.

Firstly it is necessary to carry out a preventive chemical, physical and pedological analysis of the soils that are intended to be used to grow the crop, in order to identify, at least partially, their composition, humidity and temperature, and in order to verify the absence of pathogens, infesting organisms and pollutant substances.

According to the invention it is therefore necessary that, during all the agricultural steps, including the steps before seeding, an agronomic technician makes numerous inspection field visits.

In particular the preventive analyses of the soil consist of verifying the physical/chemical conditions of the soils.

The fields for cultivation must therefore be selected by avoiding the presence in the vicinity of potentially pollutant sites, verifying the texture of the soils, their slope, the availability of water and also seeking to minimize the distance from the conversion factory.

In order to optimize production, optionally preventive weeding and/or fertilization operations can also be carried out: these steps also must take account of the need to minimize the introduction into the environment of harmful substances, and will therefore be carried out using weedkillers and/or fertilizers with low environmental impact which can be absorbed by the soil leaving negligible residual quantities of potentially pollutant substances (and in any case lower than preset threshold values).

Thereafter, a selection is made from natural, genetically unmodified seeds, of those that are best adapted to the parameters of the soil which were identified previously.

The seeds used must be selected from varieties that are specifically identified with the wording "GM-FREE". These must further have specific varietal characteristics that make them suitable for obtaining the maximum harvest yield and for limiting the need for treatments: in order to obtain such characteristics it is necessary to identify the seeds that are best adapted to the characteristics of the soil in which they will be sown; every single type of seed variety ensures the best yield if arranged in a soil that has certain characteristics. Matching a specific seed variety with a respective soil therefore makes it possible to ensure optimal productivity and also to ensure a high standard of quality of the vegetables at the end of the cultivation. It is clear that plants that can grow in an ideal environment (ideal in terms of its chemical, physical and pedological profile) will be less prone to diseases, infections and infestations, and therefore will make it possible to minimize the use of pesticides.

Furthermore the selection of the particular seeds is aimed at ensuring the suitability of the vegetable that can be obtained, with reference to the envisaged purpose of use (e.g. choice of specific varieties of vegetables for correct industrial processing and conversion).

In this case also it should be noted that the choice of fertilizer will be adapted to ensure that the seeds end up in an environment that corresponds as closely as possible to the ideal environment (ideal in terms of its chemical, physical and pedological profile) envisaged by the producer (and/or by the breeder, for new plant varieties).

Once the step of seeding is complete, it will be necessary for a specialist technician to conduct periodic repeated checks on the vegetables, which develop after seeding, in order to detect diseases and/or infestations of the vegetables.

Executing periodic checks, at short intervals, of the crops makes it possible to quickly identify the presence of diseases and/or infestations and to limit any plant protection treatments to restricted areas, or to minimize the dose thereof by way of the minimal incidence of the disease or infestation on the vegetables.

For the reasons listed above it can therefore be necessary, in some cases, to carry out at least one plant protection treatment using active ingredients selected from insecticides, herbicides, acaricides, snailcides and fungicides.

These treatments make it possible to maximize productivity (in that they protect the vegetables being cultivated from damage that could be caused by the diseases and/or by the infestations).

Prompt execution of the plant protection treatment during the first appearance (even if only sporadic and localized) of diseases and/or infestations further make it possible to limit the spread thereof, making it possible to subject only the affected areas to the treatment, thus avoiding any contact in unaffected areas with plant protection products.

Coming up to the harvest period, it is further necessary to execute periodic repeated checks on samples of the vegetables, in order to measure the residual concentration of plant protection active ingredients.

If the residual concentration of plant protection active ingredients is lower than 0.01 mg/Kg, the cultivated vegetables can be harvested.

With particular reference to the threshold value given up to now for the purposes of example, it is important that the harvest take place when the vegetables have matured, after having verified that the plant protection product residues are below 0.01 mg/Kg.

It must be remembered that some vegetables exhibit specific behavior that needs to be assessed by the specialist technician in order to select the best time for the harvest (optionally also as a function of the weather conditions, of the day/night cycle and of the seasonal cycle).

The periodic checks comprise a representative sampling of the field to be harvested carried out by an agronomic technician and an analysis to verify the presence if any of a wide number of active ingredients (over 400): each one of these active ingredients must be lower than the preset threshold, for example equal to 0.01 mg/Kg (0.01 ppm). The decision whether or not to proceed with the harvest is the exclusive prerogative of the agronomic technician, who will authorize the harvest only when the tests confirm the presence, in the cultivated vegetables, of a residue of plant protection active ingredients lower than a preset threshold, for example equal to 0.01 mg/Kg.

For the optimal application of the method according to the invention, the operations to measure the residual concentration of active plant protection ingredients should be carried out in a laboratory equipped with gas chromatographs with different detectors (ECD, NPD, FD), gas-chromatographs coupled to mass spectrometers, liquid chromatographs with spectrophotometer detectors (diode arrays) and/or coupled to mass spectrometers of UPLC-MS type (Ultra Performance Liquid Chromatography - Mass Spectrometry) and atomic absorption spectrophotometers of HPLC type (High Performance Liquid Chromatography).

The analyses in the periodic checks will therefore be carried out at qualified laboratories that will guarantee the reliability of every analytical data item.

It should be noted that, according to the invention, only when no residues of active ingredients are detectable (or in any case when the level is lower than a preset threshold value) will it be possible to classify the vegetables with the definition "free from pesticide residues".

It should be noted that in addition to pesticides, nitrates and heavy metals, according to the type of crops, can also be analyzed in order to minimize their presence in the harvest.

Furthermore, in order to render traceable each batch of packaged frozen food product deriving from a harvest obtained by applying the agronomic method described above, all the data corresponding to each step are cataloged in a specific database and associated with a corresponding identification string shown on the containers with which the packaged frozen food product will be sold.

In fact, for vegetables classified as "free from pesticide residues" there is complete traceability of the product in terms of place of cultivation, seeds used, treatments performed etc, i.e. all the information details necessary to give definite indications of the origin of the product.

It should be noted that, even after the harvest, the vegetables must be treated and converted taking precautions adapted to prevent any possible contamination, in the subsequent steps, until they are sold. This additional precaution in the final steps of preparing the food product which will be placed on sale is necessary so that it can maintain the qualification that it is "free from pesticide residues", i.e. that even the food product on sale has a residue of pesticides lower than the limit of 0.01 mg/Kg (or other preset threshold), even if it is used as an ingredient in a finished food product constituted by a plurality of different ingredients.

Advantageously, the method and the corresponding food product produced according to such method for preparing cut and frozen vegetables makes it possible to safeguard the organoleptic and nutritional properties of the vegetables of which the product is constituted.

Conveniently, the food product, constituted by frozen and packaged vegetables is easy and quick to prepare and has a useful commercial life, i.e. shelf life, equal to at least 18 months.

The invention, thus conceived, is susceptible of numerous modifications and variations, all of which are within the scope of the appended claims. Moreover, all the details may be substituted by other, technically equivalent elements.

In the embodiments illustrated, individual characteristics shown in relation to specific examples may in reality be interchanged with other, different characteristics, existing in other embodiments.

In practice, the materials employed, as well as the dimensions, may be any according to requirements and to the state of the art.

## Claims

1. A method for preparing cut and frozen vegetables, comprising the steps of:
- washing the vegetables in order to eliminate any residues of earth or of other substances and materials which may have accumulated during the harvest;
- subjecting said vegetables to mechanical treatment in order to isolate the edible part thereof;
- cutting said vegetables into strips of thickness comprised between 2 mm and 5 mm and width comprised between 2 mm and 20 mm wherein the strips have a long pasta format such as spaghetti, tagliatelle and pappardelle, through the use of a cutting device;
- steam-cooking said strips;
- air-drying said strips;
- dividing said strips into portions corresponding to a preset quantity;
- packaging said portions of strips in containers through the use of a packaging machine;
- freezing said containers containing said portions by way of a freezer to a temperature comprised between -18 °C and -30 °C.

2. The method according to claim 1, **characterized in that** it comprises the step of:
- checking, through the use of a device of the type of a metal detector, X-ray detector, for the presence of foreign objects inside said containers.

3. The method according to claim 1 or 2, **characterized in that** it comprises the steps of:
- vacuum packaging said portions of strips through the use of a machine for insertion into packets;
- checking, through the use of a device of the type of a metal detector, X-ray detector, for the presence of foreign objects inside said packets;
- freezing said packets by way of a freezer to a temperature comprised between -18 °C and -30 °C.

4. The method according to one or more of the preceding claims, **characterized in that** said step of packaging includes a substep of:
- adding to said portions of strips at least one pellet containing a precooked and frozen condiment in order to flavor said strips.

5. The method according to one or more of the preceding claims, **characterized in that** after said cooking step there is a substep of:
- adding to said strips at least one condiment in order to flavor said strips.

6. A food product comprising cut and frozen vegetables obtained by a method according to one or more of the preceding claims.

7. The food product according to claim 5, **characterized in that** it comprises a condiment in order to flavor said strips.

8. The food product according to claim 5, **characterized in that** it comprises at least one pellet containing a precooked and frozen condiment in order to flavor said strips.

9. The food product according to one or more of claims 6 to 8, **characterized in that** said vegetables are of the type chosen from tubers such as potatoes turnips, parsnips, daikon and beetroots, carrots, squashes, pumpkins, aubergines, cucumbers.

10. The food product according to one or more of claims 6 to 9, **characterized in that** said condiment comprises at least one element chosen from plants, meat, fish, cheese, oil.

11. The food product according to one or more of claims 6 to 10, **characterized in that** said vegetables contain a residue of pesticides lower than a preset threshold of 0.01 mg/Kg.

12. The food product according to one or more of claims 6 to 11, **characterized in that** said vegetables are of the type originating from organic agriculture.

13. The food product according to one or more of claims 6 to 12, **characterized in that** said container is constituted by a box-like body, a packet, a combination thereof.

14. The food product according to one or more of claims 6 to 13, **characterized in that** said container is at least partially constituted by at least one material selected from ethylene vinyl alcohol (EVOH), polyamide (PA), polyethylene (PE), lignin, polymers derived from maize, cellulose (of plant origin), paper, or cardboard, said container being microwave-safe.

15. The food product according to one or more of claims 6 to 14, **characterized in that** said container is constituted by at least one material of the type of ethylene vinyl alcohol (EVOH), polyamide (PA), or polyethylene (PE), in order to render said container at least partially recyclable.

16. The food product according to one or more of claims 6 to 15, **characterized in that** said container is constituted by at least one material of the type of lignin, polymers derived from maize, cellulose of plant origin, paper, or cardboard, in order to render said container compostable.

## Patentansprüche

1. Verfahren zur Zubereitung von geschnittenem und gefrorenem Gemüse, das die folgenden Schritte aufweist:
• Waschen des Gemüses, um eventuelle Rückstände von Erde oder anderen Stoffen und Materialien, die sich während der Ernte angesammelt haben können, zu entfernen
• mechanische Behandlung des Gemüses, um den essbaren Teil zu isolieren;
• Schneiden des Gemüses in Streifen, die eine Dicke zwischen 2 mm und 5 mm und eine Breite zwischen 2 mm und 20 mm aufweisen, wobei die Streifen ein langes Nudelformat wie Spaghetti, Tagliatelle und Pappardelle haben, durch die Verwendung einer Schneidevorrichtung;
• Dampfgaren der Streifen;
• Lufttrocknen der Streifen;
• Aufteilen der Streifen in Portionen, die einer vorgegebenen Menge entsprechen;
• Verpacken der Streifenportionen in Behälter unter Verwendung einer Verpackungsmaschine;
• Einfrieren der die Portionen enthaltenden Behälter mit Hilfe eines Gefriergeräts auf eine Temperatur zwischen -18 °C und -30 °C.

2. Verfahren nach Anspruch 1, **dadurch gekennzeichnet, dass** es den folgenden Schritt aufweist:
- Prüfen des Vorhandenseins von Fremdkörpern in den Behältern mittels einer Vorrichtung vom Typ Metalldetektor, Röntgendetektor.

3. Verfahren nach Anspruch 1 oder 2, **dadurch gekennzeichnet, dass** es die folgenden Schritte aufweist:
• Vakuumverpacken der Streifenportionen durch Verwendung einer Maschine zum Einlegen in Pakete;
• Prüfen des Vorhandenseins von Fremdkörpern in den Paketen mit Hilfe einer Vorrichtung vom Typ Metalldetektor, Röntgendetektor;
• Einfrieren der Pakete mit Hilfe eines Gefriergeräts auf eine Temperatur zwischen -18 °C und -30 °C.

4. Verfahren nach einem oder mehreren der vorangehenden Ansprüche, **dadurch gekennzeichnet, dass** der Schritt des Verpackens einen Teilschritt aufweist:
- Hinzufügen von mindestens einem Pellet, das eine vorgekochte und gefrorene Zutat enthält, zu den Streifenportionen, um die Streifen zu aromatisieren.

5. Verfahren nach einem oder mehreren der vorhergehenden Ansprüche, **dadurch gekennzeichnet, dass** nach dem Schritt des Kochens ein Teilschritt erfolgt:
- Hinzufügen von mindestens einer Zutat zu den Streifen, um die Streifen zu aromatisieren.

6. Lebensmittelprodukt, das geschnittenes und gefrorenes Gemüse aufweist, das durch ein Verfahren nach einem oder mehreren der vorangehenden Ansprüche erhalten wurde.

7. Lebensmittelprodukt nach Anspruch 5, **dadurch gekennzeichnet, dass** es eine Zutat aufweist, um die Streifen zu aromatisieren.

8. Lebensmittelprodukt nach Anspruch 5, **dadurch gekennzeichnet, dass** es mindestens ein Pellet aufweist, das eine vorgekochte und gefrorene Zutat enthält, um die Streifen zu aromatisieren.

9. Lebensmittelprodukt nach einem oder mehreren der Ansprüche 6 bis 8, **dadurch gekennzeichnet, dass** das Gemüse von der Art ist, die aus Knollen wie Kartoffeln, Rüben, Pastinaken, Daikon und Rüben, Karotten, Kürbissen, Auberginen, Gurken ausgewählt wird.

10. Lebensmittelprodukt nach einem oder mehreren der Ansprüche 6 bis 9, **dadurch gekennzeichnet, dass** die Zutat mindestens ein Element aufweist, das aus Pflanzen, Fleisch, Fisch, Käse, Öl ausgewählt wird.

11. Nahrungsmittel nach einem oder mehreren der Ansprüche 6 bis 10, **dadurch gekennzeichnet, dass** das Gemüse einen Rückstand an Pestiziden enthält, der unter einem vorgegebenen Schwellenwert von 0,01 mg/Kg liegt.

12. Lebensmittel nach einem oder mehreren der Ansprüche 6 bis 11, **dadurch gekennzeichnet, dass** das Gemüse aus biologischem Anbau stammt.

13. Lebensmittelprodukt nach einem oder mehreren der Ansprüche 6 bis 12, **dadurch gekennzeichnet, dass** der Behälter aus einem kastenförmigen Körper, einem Paket oder einer Kombination davon besteht.

14. Das Lebensmittelprodukt nach einem oder mehreren der Ansprüche 6 bis 13, **dadurch gekennzeichnet, dass** der Behälter zumindest teilweise aus mindestens einem Material besteht, das aus Ethylenvinylalkohol (EVOH), Polyamid (PA), Polyethylen (PE), Lignin, aus Mais gewonnenen Polymeren, Zellulose (pflanzlichen Ursprungs), Papier oder Pappe ausgewählt ist, wobei der Behälter mikrowellengeeignet ist.

15. Lebensmittelprodukt nach einem oder mehreren der Ansprüche 6 bis 14,
**dadurch gekennzeichnet, dass** der Behälter aus mindestens einem Material vom Typ Ethylenvinylalkohol (EVOH), Polyamid (PA) oder Polyethylen (PE) besteht, um den Behälter zumindest teilweise recycelbar zu machen.

16. Lebensmittelprodukt nach einem oder mehreren der Ansprüche 6 bis 15, **dadurch gekennzeichnet, dass** der Behälter aus mindestens einem Material vom Typ Lignin, Polymere aus Mais, Zellulose pflanzlichen Ursprungs, Papier oder Pappe besteht, um den Behälter kompostierbar zu machen.

## Revendications

1. Procédé de préparation de légumes coupés et surgelés, comprenant les étapes de :
- lavage des légumes afin d'éliminer les résidus éventuels de terre ou d'autres substances et matériaux qui peuvent s'être accumulés lors de la récolte ;
- soumission desdits légumes à un traitement mécanique afin d'isoler la partie comestible de ceux-ci ;
- découpe desdits légumes en bandes d'épaisseur comprise entre 2 mm et 5 mm et de largeur comprise entre 2 mm et 20 mm, les bandes ayant un format de pâtes longues telles que des spaghetti, des tagliatelles et des pappardelles, grâce à l'utilisation d'un dispositif de coupe ;
- cuisson à la vapeur desdites bandes ;
- séchage à l'air desdites bandes ;
- division desdites bandes en parties correspondant à une quantité prédéfinie ;
- conditionnement desdites parties de bandes dans des récipients grâce à l'utilisation d'une machine de conditionnement ;
- congélation desdits récipients contenant lesdites parties au moyen d'un congélateur à une température comprise entre -18 °C et -30 °C.

2. Procédé selon la revendication 1, **caractérisé en ce qu'**il comprend les étapes de :
- vérification, grâce à l'utilisation d'un dispositif du type d'un détecteur de métal, d'un détecteur à rayons X, de la présence de corps étrangers à l'intérieur desdits récipients.

3. Procédé selon la revendication 1 ou 2, **caractérisé en ce qu'**il comprend les étapes de :
- conditionnement sous vide desdites parties de bandes grâce à l'utilisation d'une machine à insérer à l'intérieur des paquets ;
- vérification, grâce à l'utilisation d'un dispositif du type d'un détecteur de métaux, d'un détecteur à rayons X, de la présence de corps étrangers à l'intérieur desdits paquets ;
- congélation desdits paquets au moyen d'un congélateur à une température comprise entre -18 °C et -30 °C.

4. Procédé selon une ou plusieurs des revendications précédentes, **caractérisé en ce que** ladite étape de conditionnement comprend une sous-étape de :
- ajout auxdites portions de bandes d'au moins un granulé contenant un condiment précuit et surgelé afin d'aromatiser lesdites bandes.

5. Procédé selon une ou plusieurs des revendications précédentes, **caractérisé en ce qu'**après ladite étape de cuisson, une sous-étape est conduite de :
- ajout auxdites bandes d'au moins un condiment afin d'aromatiser lesdites bandes.

6. Produit alimentaire comprenant des légumes coupés et congelés obtenus par un procédé selon une ou plusieurs des revendications précédentes.

7. Produit alimentaire selon la revendication 5, **caractérisé en ce qu'**il comprend un condiment pour aromatiser lesdites bandes.

8. Produit alimentaire selon la revendication 5, **caractérisé en ce qu'**il comprend au moins un granulé contenant un condiment précuit et congelé pour aromatiser lesdites bandes.

9. Produit alimentaire selon une ou plusieurs des revendications 6 à 8, **caractérisé en ce que** lesdits légumes sont du type choisi parmi des tubercules tels que des pommes de terre, des navets, des panais, du daikon et des betteraves, des carottes, des courges, des potirons, des aubergines, des concombres.

10. Produit alimentaire selon une ou plusieurs des revendications 6 à 9, **caractérisé en ce que** ledit condiment comprend au moins un élément choisi parmi des plantes, de la viande, du poisson, du fromage, de l'huile.

11. Produit alimentaire selon une ou plusieurs des revendications 6 à 10, **caractérisé en ce que** lesdits légumes contiennent un résidu de pesticides inférieur à un seuil prédéfini de 0,01 mg/kg.

12. Produit alimentaire selon une ou plusieurs des revendications 6 à 11, **caractérisé en ce que** lesdits légumes sont du type issu de l'agriculture biologique.

13. Produit alimentaire selon une ou plusieurs des revendications 6 à 12, **caractérisé en ce que** ledit récipient est constitué d'un corps en forme de boîte, d'un paquet, ou d'une combinaison de ceux-ci.

14. Produit alimentaire selon une ou plusieurs des revendications 6 à 13, **caractérisé en ce que** ledit récipient est au moins partiellement constitué d'au moins un matériau choisi parmi éthylène-alcool vinylique (EVOH), le polyamide (PA), le polyéthylène (PE), la lignine, des polymères dérivés de maïs, la cellulose (d'origine végétale), du papier ou du carton, ledit récipient étant compatible avec les micro-ondes.

15. Produit alimentaire selon une ou plusieurs des revendications 6 à 14, **caractérisé en ce que** ledit récipient est constitué d'au moins un matériau du type éthylène-alcool vinylique (EVOH), polyamide (PA) ou polyéthylène (PE), afin rendre ledit récipient au moins partiellement recyclable.

16. Produit alimentaire selon une ou plusieurs des revendications 6 à 15, **caractérisé en ce que** ledit récipient est constitué d'au moins un matériau du type de la lignine, de polymères dérivés de maïs, de cellulose d'origine végétale, de papier ou de carton, afin de rendre ledit récipient compostable.
